# EUROPÄISCHE PATENTSCHRIFT

(11) **EP 0 517 118 B1**
(45) Veröffentlichungstag und Bekanntmachung des Hinweises auf die Patenterteilung: **11.01.1995**
(21) Anmeldenummer: 92109151.8
(22) Anmeldetag: 30.05.1992
(51) Int. Cl.: B29C 47/66, B29C 47/92, B29C 47/40, B29B 7/48

(54) **Vorrichtung zum Plastifizieren von Kunststoff**
Apparatus for plastifying plastic
Dispositif pour la plastification de matière plastique

(30) Priorität: 03.06.1991 DE 4118091
(43) Veröffentlichungstag der Anmeldung: 09.12.1992
(73) Patentinhaber: FRIEDRICH THEYSOHN GmbH, D-30853 Langenhagen (DE)
(72) Erfinder: Nogossek, Alfred, W-3320 Salzgitter 1 (DE)
(74) Vertreter: Döring, Roger, Dipl.-Ing.

(56) Entgegenhaltungen:
- DE-A- 3 042 427
- DE-C- 3 841 729
- FR-A- 2 197 635
- US-A- 2 631 016
- US-A- 3 169 752
- US-A- 4 408 887

## Beschreibung

Die Erfindung bezieht sich auf eine Vorrichtung zum Plastifizieren von Kunststoff, bestehend aus zwei miteinander kämmenden, um ihre Achsen drehbaren Schnecken und aus einem Schneckengehäuse, in dem die beiden Schnecken angeordnet sind, bei welcher im Verlauf der Schnecken mindestens eine Drosselstelle zur stufenlosen Veränderung des Strömungsquerschnitts im Schneckengehäuse angebracht ist (DE-Z "PLASTVERARBEITER" 41, Jahrgang 1990, Nr. 10, Seite 140).

Derartige Vorrichtungen werden auch als Doppelschnecken-Extruder oder Compoundieranlagen bezeichnet. Im folgenden wird der Einfachheit halber das kürzere Wort "Extruder" verwendet. Sie sind mit zwei Schnecken ausgerüstet, die mit gleicher Drehrichtung oder entgegengesetzt gedreht werden können. Im Verlauf der Schnecken sind bei solchen Extrudern mechanisch stufenlos einstellbare Drosselstellen vorgesehen, durch welche die Strömungsgeschwindigkeit des zu verarbeitenden Materials verändert werden kann. Es ist dadurch eine einfache Anpassung an unterschiedliche Fließeigenschaften und Viskositäten des zu verarbeitenden Materials möglich. Durch die Drosselstelle sind Verweilzeit und Füllgrad und damit der Plastifiziergrad des Materials beeinflußbar.

In der eingangs erwähnten DE-Z "PLASTVERARBEITER" sind zwei Extruder mit unterschiedlich aufgebauten Drosselstellen beschrieben. Die eine Version ist eine "Radialdrossel", bei welcher im Schneckengehäuse in radialer Richtung verschiebbare Schieberplatten mehr oder weniger tief in das Schneckengehäuse hineinragen. Die Schieberplatten erzeugen im Schneckengehäuse sogenannte "Totwassergebiete", in denen die Schmelze stehen bleibt. Die dadurch gebildeten Rückstände führen zu Verunreinigungen in der Schmelze und damit zu unbrauchbaren Produkten. Bei der anderen, als "Axialdrossel" bezeichneten Version ist im Drosselbereich im Schneckengehäuse eine radiale Durchmesserverengung angebracht, an welche die Schnecken mit speziell ausgeformten Bereichen dicht heranragen. Durch Verschiebung der Schnecken im Schneckengehäuse in axialer Richtung kann die Länge des Drosselbereichs verändert werden. Wegen der axialen Verstellbarkeit der Schnecken im Schneckengehäuse ist eine solche Axialdrossel apparativ sehr aufwendig.

Der Erfindung liegt die Aufgabe zugrunde, die eingangs geschilderte Vorrichtung so weiterzubilden, daß bei einfachem Aufbau und ohne Bildung von Totwassergebieten eine wirksame Veränderung des Strömungsquerschnitts möglich wird.

Diese Aufgabe wird gemäß der Erfindung dadurch gelöst,
- daß die Schnecken an der Drosselstelle mindestens zwei sich quer zu ihrer Achsrichtung erstreckende, durch einen Zwischenraum voneinander getrennte und parallel zueinander verlaufende Drosselscheiben aufweisen, deren Außendurchmesser dem Innendurchmesser des Schneckengehäuses entspricht und die in ihren Umfangsflächen über den ganzen Umfang verteilt voneinander getrennte Vertiefungen aufweisen, die sich über die ganze Breite der Drosselscheiben erstrecken und
- daß in Höhe des Zwischenraums zwischen den beiden Drosselscheiben im Schneckengehäuse über dessen ganzen Umfang verteilt Stifte mit rundem Querschnitt angebracht sind, die bezüglich der Schnecken in radialer Richtung verstellbar sind und in Abhängigkeit vom gewünschten Strömungsquerschnitt der Drosselstelle mit variabler Länge in den Zwischenraum hineinragen.

Mit den Drosselscheiben ist im Verlauf der beiden Schnecken ein Scherteil mit erhöhter Reibung eingebaut, durch welches das zu verarbeitende Material voll aufgeschmolzen wird. Der Strömungsquerschnitt an dieser Stelle der Schnecken wird ohne die im Schneckengehäuse angebrachten Stifte im wesentlichen durch die Vertiefungen in den Umfangsflächen der Drosselscheiben bestimmt. Eine einfache und schnelle Veränderung des Strömungsquerschnitts an der Drosselstelle ist durch Verschiebung der Stifte erreichbar, die mehr oder weniger tief in den Zwischenraum zwischen den Drosselscheiben eingebracht werden können. Es ist so sehr schnell eine Anpassung des Strömungsquerschnitts an das Fließverhalten und die Viskosität des zu verarbeitenden Materials möglich. Da die Stifte rund sind, führen sie auch dann nicht zu Totwasserräumen, wenn sie mit ihrer ganzen Länge in den Zwischenraum zwischen den Drosselscheiben hineinragen. Der störungsfreie Transport der Schmelze ist also sichergestellt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 in schematischer Darstellung eine Vorrichtung nach der Erfindung, teilweise im Schnitt.
Fig. 2 einen Schnitt durch Fig. 1 längs der Linie II - II in vergrößerter Darstellung.
Fig. 3 eine Einzelheit der Vorrichtung in weiter vergrößerter Darstellung.
Fig. 4 und 5 weitere Einzelheiten der Vorrichtung in nochmals vergrößerter Darstellung.

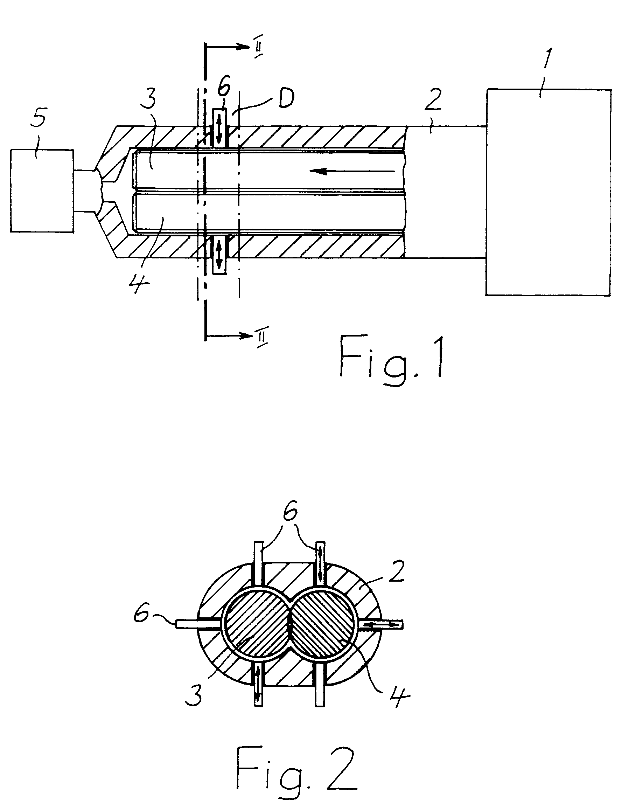

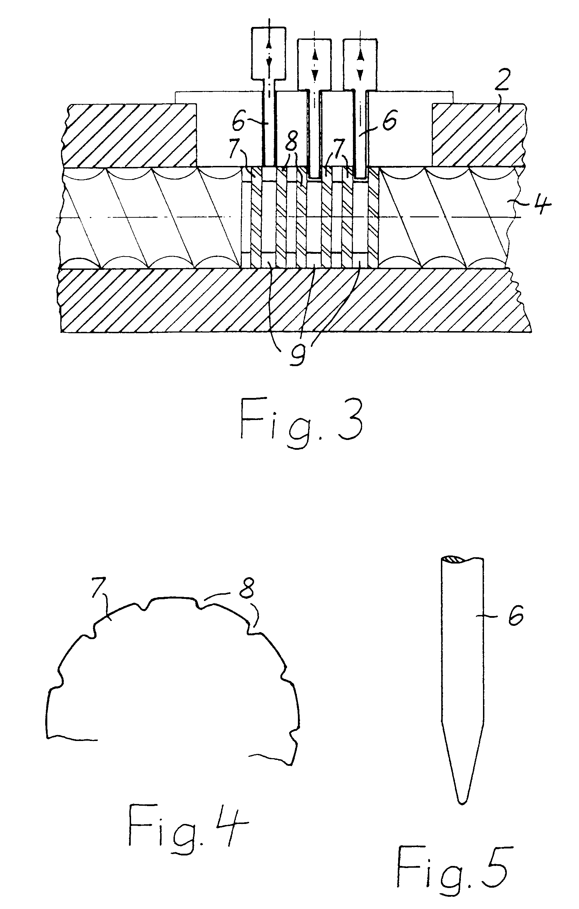

In Fig. 1 ist ein Extruder 1 schematisch dargestellt, in dessen Schneckengehäuse 2 zwei Schnecken 3 und 4 angeordnet sind. Es handelt sich also um einen Doppelschneckenextruder bzw. eine Compoundieranlage. Die Schnecken 3 und 4 können gleichsinnig um ihre Achse gedreht werden, aber auch mit entgegengesetzter Richtung. In Fig. 1 sind nur die für das Verständnis der Erfindung wichtigen Teile eingezeichnet. Zur Bearbeitung von in den Extruder 1 eingefülltem Kunststoff durch die miteinander kämmenden und um ihre Achsen drehenden Schnecken 3 und 4 wird der Kunststoff in Richtung des Pfeiles zum Spritzkopf 5 bewegt. Der Aufbau der Schnecken 3 und 4 mit üblichen Förder- und Mischteilen ist in Fig. 1 nicht genauer dargestellt. Im Verlauf der Schnecken 3 und 4 und im Schneckengehäuse 2 ist eine Drosselstelle D angebracht, die sich zwischen den beiden strichpunktierten Linien in Fig. 1 befindet. Sie ist genauer in Fig. 3 dargestellt.

Die Drosselstelle D ist außerdem aus Fig. 2 im Querschnitt erkennbar. Es sind an der Drosselstelle D im Schneckengehäuse 2 Stifte 6 angeordnet, die bezogen auf die Schnecken 3 und 4 in radialer Richtung bewegbar sind, so wie es die eingezeichneten Doppelpfeile angeben. Die Stifte 6 haben einen runden Querschnitt. Sie sind über den gesamten Umfang des Schneckengehäuses 2 verteilt, und zwar vorzugsweise in gleichmäßigen Abständen.

In Fig. 3 ist in vergrößerter Darstellung nur ein Abschnitt der Schnecke 4 wiedergegeben. Die gleich aufgebaute Schnecke 3 befindet sich in der Zeichenebene hinter der Schnecke 4 und ist daher nicht zu sehen. An der Drosselstelle D weist die Schnecke 4 Drosselscheiben 7 auf, deren Außendurchmesser dem Innendurchmesser des Schneckengehäuses 2 entspricht. Die Drosselscheiben 7 haben in ihren Umfangsflächen über den gesamten Umfang verteilt Vertiefungen 8, die jeweils über die gesamte Breite einer Drosselscheibe 7 verlaufen. Die Vertiefungen 8 sind auch aus der vergrößerten Darstellung in Fig. 4 ersichtlich. Sie können genau axial aber auch schräg zur Achse der Schnecke 4 verlaufen, so wie es aus Fig. 3 zu ersehen ist. Die Drosselscheiben 7 können auch ein umlaufendes Sägezahnprofil haben, durch welches ebenfalls Vertiefungen an der Umfangsfläche gebildet sind. Die zu fördernde Schmelze wird durch die drehende Schnecke 4 durch die Vertiefungen 8 hindurchgedrückt.

Im dargestellten Ausführungsbeispiel ist die Schnecke 4 mit sechs Drosselscheiben 7 ausgerüstet, die paarweise zusammengehören. Die Schnecke 4 soll an der Drosselstelle D mindestens zwei Drosselscheiben 7 aufweisen. Es können aber auch mehr als sechs Drosselscheiben sein. Je zwei der Drosselscheiben 7 sind durch einen Zwischenraum 9 voneinander getrennt, der exakt in Höhe der Stifte 6 liegt. Die Stifte 6 können daher in Folge ihrer radialen Beweglichkeit in den Zwischenraum 9 eingebracht werden, und zwar mehr oder weniger tief. In Fig. 3 ist der linke Stift 6 nicht im Zwischenraum 9 angeordnet, sondern er nimmt seine eine Endstellung ein, in welcher er vollständig innerhalb des Profils des Schneckengehäuses 2 liegt. Der mittlere und der rechte Stift 6 hingegen sind vollständig in den Zwischenraum 9 eingefahren, so daß sie ihre andere Endstellung einnehmen.

Neben der in Fig. 3 dargestellten Ausführung mit paarweise wirksamen Drosselscheiben 7 ist es prinzipiell auch möglich, durch Zwischenräume getrennte einzelne Drosselscheiben 7 einzusetzen. Es können dann für jeden Zwischenraum zwischen zwei Drosselscheiben 7 radial verstellbare Stifte 6 vorgesehen werden.

Der Strömungsquerschnitt der Schnecke 4 wird im Bereich der Drosselstelle D durch die Position der Stifte 6 beeinflußt.

Die Stifte 6 können, wie bereits erwähnt, jede beliebige Stellung innerhalb der Vertiefung 9 einnehmen. Es ist dadurch möglich, mit den an der Drosselstelle D angeordneten Stiften 6 den Strömungsquerschnitt des Extruders 1 jeweils an das Fließverhalten bzw. die Viskosität des zu fördernden Materials anzupassen. Neben den beiden oben erwähnten Endstellungen der Stifte 6 ist jede beliebige Zwischenstellung möglich.

Vor den Spitzen der Schnecken 3 und 4 kann die Qualität der Schmelze beispielsweise mit einem IR-Spektrometer oder einem Onlinerheometer beurteilt werden. Der dabei gewonnene Wert kann mit einem Sollwert verglichen werden. Für eine Regelung der Qualität der Schmelze können die Eintauchtiefe bzw. die Position der Stifte 6 verwendet werden. Diese Regelung kann über einen Rechner automatisiert werden.

Die Stifte 6 haben einen runden Querschnitt. Sie sind in bevorzugter Ausführungsform kreisrund ausgeführt. Ihr Durchmesser liegt bezogen auf den Durchmesser d der Schnecken 3 und 4 zwischen 0,05 x d und 0,5 x d. Die Stifte 6 bewirken beim Einbringen in den Zwischenraum 9 zwar eine Verengung des Strömungsquerschnitts innerhalb der Drosselstelle D, erzeugen jedoch keine Totwassergebiete, in denen sich Schmelze absetzen könnte. Das Material fließt vielmehr vollständig an den Stiften 6 vorbei, so daß es störungsfrei bis zum Spritzkopf 5 gefördert werden kann.

Die Stifte 6 können in einer weiteren Ausgestaltung an ihrer in den Zwischenraum 9 hineinragenden Spitze, so wie es in Fig. 5 dargestellt ist, nach Art eines Schraubenziehers konisch verjüngt sein. Sie sind dann außerdem um ihre Achse drehbar, so daß je nach Stellung der Schräge der Schraubenzieherfläche eine weitere feinfühlige Beeinflussung des Strömungsquerschnittes möglich ist.

## Patentansprüche

1. Vorrichtung zum Plastifizieren von Kunststoff, bestehend aus zwei miteinander kämmenden, um ihre Achse drehbaren Schnecken und aus einem Schneckengehäuse, in dem die beiden Schnecken angeordnet sind, bei welcher im Verlauf der Schnecken mindestens eine Drosselstelle zur stufenlosen Veränderung des Strömungsquerschnitts im Schneckengehäuse angebracht ist, dadurch gekennzeichnet,
- daß die Schnecken (3,4) an der Drosselstelle (D) mindestens zwei sich quer zu ihrer Achsrichtung erstreckende, durch einen Zwischenraum (9) voneinander getrennte und parallel zueinander verlaufende Drosselscheiben (7) aufweisen, deren Außendurchmesser dem Innendurchmesser des Schneckengehäuses (2) entspricht und die in ihren Umfangsflächen über den ganzen Umfang verteilt voneinander getrennte Vertiefungen (8) aufweisen, die sich über die ganze Breite der Drosselscheiben (7) erstrecken und
- daß in Höhe des Zwischenraums (9) zwischen den beiden Drosselscheiben (7) im Schneckengehäuse (2) über dessen ganzen Umfang verteilt Stifte (6) mit rundem Querschnitt angebracht sind, die bezüglich der Schnecken (3,4) in radialer Richtung verstellbar sind und in Abhängigkeit vom gewünschten Strömungsquerschnitt der Drosselstelle (D) mit variabler Länge in den Zwischenraum (9) hineinragen.

2. Vorrichtung nach Anspruch 1, dadurch gekennzeichnet, daß die Drosselscheiben (7) ein Sägezahnprofil haben.

3. Vorrichtung nach Anspruch 1 oder 2, dadurch gekennzeichnet, daß an der Drosselstelle (D) zwei oder mehr Paare von jeweils durch einen Zwischenraum (9) getrennten Drosselscheiben (7) mit zugehörigen, über den ganzen Umfang des Schneckengehäuses (2) verteilten Stiften (6) angebracht sind.

4. Vorrichtung nach einem der Ansprüche 1 bis 3, dadurch gekennzeichnet,
- daß die Stifte (6) an ihren dem Zwischenraum (9) zwischen den Drosselscheiben (7) zugewandten Enden nach Art eines Schraubenziehers verjüngt sind und
- daß die Stifte (6) um ihre Achsen drehbar sind.

5. Vorrichtung nach einem der Ansprüche 1 bis 4, dadurch gekennzeichnet, daß der Durchmesser der Stifte (6) zwischen 0,05 x d und 0,5 x d liegt, wobei d der Durchmesser der Schnecken (3,4) ist.

## Claims

1. Device for plasticating plastic, consisting of two intermeshing screws which can rotate about their axes and of a screw housing in which the two screws are arranged, in which device at least one throttle point is disposed in the path of the screws to continuously vary the flow cross section in the screw housing, characterised in
- that the screws (3, 4) comprise at the throttle point (D) at least two baffles (7) which extend transversely to the axial direction of the screws and parallel to one another and are separated from one another by an interspace (9), the external diameter of which baffles corresponds to the internal diameter of the screw housing (2) and which comprise in their circumferential surfaces recesses (8) which are distributed over the entire circumference, are separated from one another and extend over the entire width of the baffles (7), and
- that pins (6) having a round cross section are disposed on a level with the interspace (9) between the two baffles (7) in the screw housing (2), are distributed over its entire circumference, can be displaced in the radial direction with respect to the screws (3, 4) and project into the interspace (9) over a variable length in accordance with the desired flow cross section of the throttle point (D).

2. Device according to claim 1, characterised in that the baffles (7) have a saw-tooth profile.

3. Device according to claim 1 or 2, characterised in that two or more pairs of baffles (7), which are in each case separated by an interspace (9), with associated pins (6) distributed over the entire circumference of the screw housing (2) are disposed at the throttle point (D).

4. Device according to any one of claims 1 to 3, characterised in
- that the pins (6) taper like a screw driver at their ends which face the interspace (9) between the baffles (7), and
- that the pins (6) can rotate about their axes.

5. Device according to any one of claims 1 to 4, characterised in that the diameter of the pins (6) is between 0.05 x d and 0.5 x d, d being the diameter of the screws (3, 4).

## Revendications

1. Dispositif pour plastifier la matière plastique, se composant de deux vis sans fin tournant autour de leur axe et venant en prise l'une avec l'autre et d'un carter de vis dans lequel sont disposées les deux vis sans fin, dispositif pour lequel il est formé, dans le tracé des vis sans fin, au moins un point d'étranglement en vue d'une modification progressive de la section transversale d'écoulement dans le carter de vis, caractérisé
- en ce que les vis sans fin (3, 4) présentent, au point d'étranglement (D), au moins deux disques d'étranglement (7) s'étendant parallèlement entre eux, transversalement à leur direction axiale et séparés par un intervalle (9), et dont le diamètre externe correspond au diamètre interne du carter de vis (2), et qui présentent, sur leurs surfaces périphériques, des encoches (8) séparées les unes des autres en étant réparties sur toute la périphérie et en s'étendant sur toute la largeur des disques d'étranglement (7), et
- en ce qu'à la hauteur de l'intervalle (9), entre les deux disques d'étranglement (7), sont mises en place des pointes (6), de section transversale ronde, qui sont réparties sur toute la périphérie du carter de vis (2), qui sont réglables par rapport aux vis sans fin (3, 4) dans le sens radial et qui pénètrent dans l'intervalle (9) sur une longueur variable en fonction de la section transversale d'écoulement désirée du point d'étranglement (D).

2. Dispositif selon la revendication 1, caractérisé en ce que les disques d'étranglement (7) ont un profil en dent de scie.

3. Dispositif selon la revendication 1 ou 2, caractérisé en ce que sont mises en place, au point d'étranglement (D), deux ou plusieurs paires de disques d'étranglement 7 séparées à chaque fois par un intervalle (9) et présentant des pointes (6) correspondantes réparties sur toute la périphérie du carter de vis (2).

4. Dispositif selon l'une des revendications 1 à 3, caractérisé
- en ce que les pointes (6) se terminent, à leurs extremités tournées vers l'intervalle (9) entre les disques d'étranglement (7) à la manière d'un tournevis et,
- en ce que les pointes (6) sont rotatives autour de leurs axes.

5. Dispositif selon l'une des revendications 1 à 4, caractérisé en ce que le diamètre des pointes (6) est de l'ordre de 0,05 x d à 0,5 x d, d étant le diamètre des vis sans fin (3, 4).
